# EUROPEAN PATENT APPLICATION

(11) **EP 4 656 674 A1**
(43) Date of publication of application: **03.12.2025**
(21) Application number: 24179283.7
(22) Date of filing: 31.05.2024
(51) Int. Cl.: C08J 5/18, B29C 48/00, B29C 48/08, C08L 69/00

(54) **EXTRUDED FILMS WITH HIGH TEMPERATURE PERFORMANCE, AND ARTICLES CONTAINING THE SAME**

(71) Applicant: SHPP Global Technologies B.V., 4612 PX Bergen op Zoom (NL)
(72) Inventor: PINGITORE, Andrew Thomas, Mount Vernon, 47620 (US); MAHOOD, James Alan, Mount Vernon, 47620 (US); PATIL, Rahul, Mount Vernon, 47620 (US)
(74) Representative: Balder IP Law, S.L.

(57) **Abstract**

An extruded film comprises a high heat polycarbonate composition comprising: a high heat polycarbonate comprising high heat bisphenol groups derived from a high heat bisphenol monomer where the corresponding homopolycarbonate of the monomer has a Tg of 155°C or higher, determined according to ASTM E1640-13 with a 1°C/min heating rate, and optionally, low heat bisphenol groups derived from a low heat monomer where the corresponding homopolycarbonate of the monomer has a Tg of lower than 155°C, determined according to ASTM E1640-13 with a 1°C/min heating rate, wherein the high heat polycarbonate comprises 0 to 10 ppm Fries rearrangement products, as determined by LC-HRMS; optionally, an additive composition, wherein the extruded film comprises 0 to 40 parts per million Fries rearrangement products, as determined by LC-HRMS. The extruded films has decreased branching in the polymer chain, thus minimizing gel defects that create flow inhomogeneity and reduce breakdown strength.

## Description

### BACKGROUND

This disclosure relates to extruded films, and in particular to capacitors including the extruded polymer films, and the manufacture of the films and the capacitors.

Electrostatic film capacitors with high volumetric energy density, high operating temperature, and long lifetime are critical components for pulse-power, automotive, and industrial electronics. Capacitors are essentially energy-storing devices having two parallel conductive plates separated by a thin layer of an electrically insulating (dielectric) film. When a voltage is applied across the plates, the electric field in the dielectric displaces electric charges, and thus stores energy. The amount of energy stored by a capacitor depends on the dielectric constant and breakdown voltage of the insulating material used to form the film, and the dimensions (total area and thickness) of the film. To maximize the total amount of energy that a capacitor can accumulate, the dielectric constant and breakdown voltage of the film are maximized, and the thickness of the film minimized. Because the physical characteristics of the dielectric material in the capacitor are the primary determining factors for the performance of a capacitor, improvements in one or more of the physical properties of the dielectric material in a capacitor can result in corresponding performance improvements in the capacitor component, usually resulting in performance and lifetime enhancements of the electronics system or product in which it is embedded.

Capacitors designed for high temperature applications can be constructed from thin films of high temperature polymers, which as used herein includes polymers having a glass transition temperature (Tg) of 170°C or higher. In particular, capacitor films can be prepared using melt extrusion processes, for example, melt cast extrusion. Because of the high glass transition temperature of high heat polycarbonates, high temperatures are also needed for melt processing and as a consequence, this may lead to degradation products during processing (e.g., Fries rearrangement products). Rearrangement products negatively impact color, dielectrics, and mechanical strength especially in ultra-thin films. Therefore, there is a need for high quality, ultra-thin films prepared from high heat polycarbonates by melt cast extrusion.

### SUMMARY

A composition is disclosed: An extruded film comprising a high heat polycarbonate composition comprising: a high heat polycarbonate comprising high heat bisphenol groups derived from a high heat bisphenol monomer where the corresponding homopolycarbonate of the monomer has a Tg of 155°C or higher, determined according to ASTM E1640-13 with a 1°C/min heating rate, and optionally, low heat bisphenol groups derived from a low heat monomer where the corresponding homopolycarbonate of the monomer has a Tg of lower than 155°C, determined according to ASTM E1640-13 with a 1°C/min heating rate, wherein the high heat polycarbonate comprises 0 to 10 ppm Fries rearrangement products, as determined by LC-HRMS.; optionally, an additive composition, wherein the extruded film comprises 0 to 40 parts per million Fries rearrangement products, as determined by LC-HRMS.

A capacitor comprising an extruded film as described above is disclosed.

Also disclosed is an electronic device comprising the extruded film.

The above described and other features are exemplified by the following detailed description.

### DETAILED DESCRIPTION

The inventors hereof have discovered processing conditions for the manufacture of extruded articles (e.g., films, metallized films, and capacitors) by melt extrusion that minimize the formation of Fries rearrangement products. The extruded articles are useful in a wide variety of applications, for example transportation (air, land, and water) applications. Conventional electric and hybrid electric transport designs use large capacitors containing biaxially oriented polypropylene (BOPP) film as part of power circuits that convert direct current (DC) from batteries or fuel cells into high voltage alternating current (AC) for the drive motors. These BOPP capacitors are located under the hood of the vehicle to minimize power loss, but the temperatures inside the engine cavity are high enough to melt BOPP. The current solution is to provide special dedicated cooling loops to the electronics units to keep the BOPP capacitors from melting. These extra cooling loops add significant cost and weight to the automobile. Advantageously, the presently disclosed extruded films derived from the high heat polycarbonate compositions and capacitors containing the films can withstand the high temperatures (e.g., 140-150°C) used in a vehicle application.

The extruded films have low levels of Fries rearrangement products. Fries rearrangement can occur during polymerization and/or processing and involves the migration of an acyl group from one aromatic ring to another. The presence of Fries rearrangement products gives rise to undesired and uncontrolled polymer branching which may negatively impact the flow properties and performance of the films. As used herein the term "Fries rearrangement product" is defined as a structural unit of a product polycarbonate which upon hydrolysis of the product polycarbonate affords a carboxy-substituted dihydroxy aromatic compound bearing a carboxy group adjacent to one or both of the hydroxy groups of the carboxy-substituted dihydroxy aromatic compound. For example, in bisphenol A polycarbonate prepared by a melt reaction method in which Fries reaction occurs, among the Fries products within the product polycarbonate are those structural units, which afford 2-carboxy bisphenol A upon complete hydrolysis of the product polycarbonate. Some Fries rearrangement structures are shown below using bisphenol A as the monomer for illustrative purposes only. 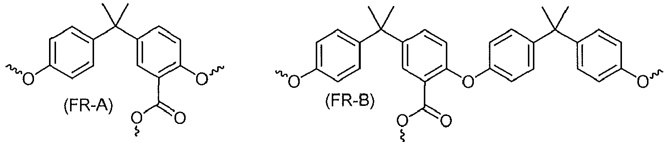 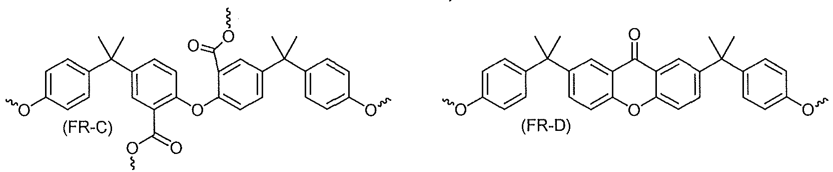 Branching in the polymer chain is undesirable as it can lead to gel defects that create flow inhomogeneity and reduce breakdown strength.

Defects may be minimized in the present capacitor films having Fries content of 50 ppm or less. Defects in capacitor films can have significant implications for the capacitor's performance and reliability. Defects include dielectric thickness variations, pinholes and voids, edge defects, cracks and delamination, electrical shorts, metallic inclusions, interfacial defects, dielectric puncture, and stress induced defects. Variations in dielectric film thickness across the capacitor can lead to non-uniform electrical properties, affecting the capacitance and voltage breakdown characteristics. Pinholes or voids in the dielectric film can compromise its insulating properties, leading to electrical leakage and reduced capacitor performance. Irregularities or discontinuities at the edges of the dielectric film can weaken the dielectric strength and increase the risk of electrical breakdown. Mechanical stress or thermal cycling can cause cracking or delamination of the dielectric film from the electrode surface.

One way that Fries rearrangement can occur is during the preparation (e.g., polymerization reaction) of polycarbonates. The extent of Fries rearrangement products present in a composition can vary depending on the reaction conditions. For example, polycarbonates that are not high heat polycarbonates (e.g., bisphenol A polycarbonate homopolymer) can be made by melt polymerization. Melt polymerization involves heating monomers to their melting points or above, causing them to react and form polymers without the presence of solvents or interfaces at reaction temperatures of 100°C to 350°C, preferably 180°C to 310°C. Fries rearrangement is more likely to occur during melt polymerization compared to interfacial polymerization due to the high temperatures needed for melt polymerization. Process optimization of melt polymerization reaction conditions can help to control the formation of Fries rearrangement products, however, the levels are not sufficiently low for ultra-thin films in applications such as capacitors.

In contrast to melt polymerization, interfacial polymerization does not require elevated temperatures, and very low amounts of Fries rearrangement products are formed. Therefore, interfacial polymerization is preferred when minimizing Fries rearrangement products.

The formation of additional Fries rearrangement products also occurs during processing and is dependent on the processing conditions used to prepare the thin films. Polycarbonate thin films can be produced using solvent or solvent-free methods. Although solvent casting offers several advantages, including the ability to produce thin and uniform films with controlled thickness and properties, it requires careful handling of solvents due to safety and environmental considerations, and the solvent evaporation step can be time-consuming.

A solvent-free processing method includes melt cast extrusion. Processing of the high heat polycarbonate into thin films can include an extrusion process for preparing polycarbonate resin pellets or granules and further extrusion of the pellets or granules to provide thin films. Processing of the high heat polycarbonate into thin films can also be accomplished by adding the raw materials to an extruder to provide thin films in a one-step process. Because high temperatures are used during melt cast extrusion, then Fries rearrangement products can form. By using a one-step extrusion process, the formation of Fries rearrangement products is expected to be less than in the two-step extrusion process. Advantageously, the inventors discovered that the processing conditions could be modified to minimize the formation of Fries rearrangement products during thermal processing (e.g., melt cast extrusion).

The[VK1] extruded films of the high heat polycarbonate compositions may have a Fries content of 100 parts per million (ppm) or less, 90 ppm or less, 80 ppm or less, 70 ppm or less, 60 ppm or less, 50 ppm or less, 40 ppm or less, 30 ppm or less, 20 ppm or less, or 10 ppm or less, as determined by LC-HRMS.

The high heat polycarbonate compositions include a high heat polycarbonate. As used herein a "high heat polycarbonate" is a polycarbonate comprising high heat bisphenol groups and optionally, low heat bisphenol groups. The high heat bisphenol groups are derived from a high heat bisphenol monomer having at least 19 carbon atoms. A high heat bisphenol monomer is a monomer where the corresponding homopolycarbonate of the monomer has a Tg of 155°C or higher. The optional low heat bisphenol groups are derived from a low heat bisphenol monomer having less than 19 carbon atoms. A low heat bisphenol monomer is a monomer where the corresponding homopolycarbonate of the monomer has a Tg of lower than 155°C. Preferably the low heat bisphenol monomer is a monomer where the corresponding homopolycarbonate has a Tg of lower than 150°C, or lower than 145°C, and the high heat bisphenol monomer is a monomer where the corresponding homopolycarbonate has a Tg of 160°C or higher, or 165°C or higher. The homopolycarbonate formed by the low heat monomer can have a minimum Tg of 80°C. The homopolycarbonate formed by the high heat monomer can have a maximum Tg of 400°C.

In an aspect, the high heat polycarbonate has a Tg of 170-250°C, or 175°C-250°C, or 180°C-250°C, 190°C-250°C, 200°C-250°C, or 200°C -250°C. Each of the Tgs of the homopolycarbonates and the polycarbonates can be determined by dynamic mechanical analysis (DMA) according to ASTM E1640-13 at a heating rate of 1°C/min and a frequency of 1 Hz.

With the carbon number proviso discussed in more detail below, the high heat polycarbonates used in the films can have low heat bisphenol carbonate units of formula (1) 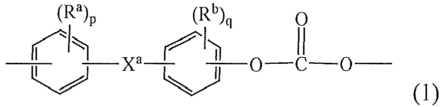 wherein R^{a} and R^{b} are each independently C₁₋₆ alkyl, C₂₋₆ alkenyl, C₃₋₆ cycloalkyl, or C₁₋₃ alkoxy, p and q are each independently 0-4, and X^{a} is a single bond, -O-, -S-, -S(O)-, -S(O)₂-, -C(O)-, a C₁₋₆ alkylidene of the formula -C(R^{c})(R^{d})- wherein R^{c} and R^{d} are each independently hydrogen or C₁₋₃ alkyl, or a group of the formula -C(=R^{e})- wherein R^{e} is a divalent C₁₋₅ hydrocarbon group. Exemplary X^{a} groups include methylene, ethylidene, neopentylidene, and isopropylidene. The bridging group X^{a} and the carbonate oxygen atoms of each C₆ arylene group can be disposed ortho, meta, or para (preferably para) to each other on the C₆ arylene group.

In an aspect, R^{a} and R^{b} are each independently a C₁₋₂ alkyl group, p and q are each independently 0-1, and X^{a} is a single bond, -O-, -S(O)-, -S(O)₂-, -C(O)-, a C₁₋₆ alkylidene of formula-C(R^{c})(R^{d})- wherein R^{c} and R^{d} are each independently hydrogen or C₁₋₃ alkyl, or a group of the formula - C(=R^{e})- wherein R^{e} is a divalent C₁₋₅ hydrocarbon group.

In an aspect, R^{a} and R^{b} are each independently a methyl group, p and q are each independently 0 or 1, and X^{a} is a single bond or a C₁₋₆ alkylidene of formula -C(R^{c})(R^{d})- wherein R^{c} and R^{d} are each independently hydrogen or methyl.

In an aspect, p and q is each 1, and R^{a} and R^{b} are each a C₁₋₃ alkyl group, preferably methyl, disposed meta to the oxygen on each ring. The bisphenol carbonate units (1) can be derived from bisphenol A, where p and q are both 0 and X^{a} is isopropylidene.

The optional low heat carbonate units (1) can be produced from the corresponding dihydroxy (bisphenol) compounds. Some illustrative examples of specific bisphenol compounds that can be used to produce first carbonate units (1) are described, for example, in WO 2013/175448 A1, US 2014/0295363, and WO 2014/072923. A combination comprising at least one of bisphenol compound can be used. In a preferred aspect, the low heat bisphenol compound is 1,1-bis(4-hydroxyphenyl) methane, 1,1-bis(4-hydroxyphenyl) ethane, 2,2-bis(4-hydroxyphenyl) propane ("bisphenol A" or "BPA"), 2,2-bis(4-hydroxyphenyl) butane, 1,1-bis(4-hydroxyphenyl) propane, 1,1-bis(4-hydroxyphenyl) n-butane, 2,2-bis(4-hydroxy-2-methylphenyl) propane, 1,1-bis(4-hydroxy-t-butylphenyl) propane, or a combination thereof. In an aspect, the low heat monomer is bisphenol A, which provides the low heat bisphenol group of formula (1a).

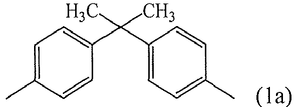

The high heat carbonate units in the polycarbonate may be of formula (2) 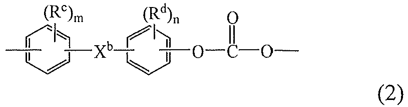 wherein R^{c} and R^{d} are each independently C₁₋₁₂ alkyl, C₂₋₁₂ alkenyl, C₃₋₈ cycloalkyl, or C₁₋₁₂ alkoxy, m and n are each independently integers of 0-4, and X^{b} is a C₃₋₈ cycloalkylene, a fused C₆₋₁₈ cycloalkylene, a group of the formula-J¹-G-J²- wherein J¹ and J² are the same or different C₁₋₆ alkylene group and G is a C₃₋₁₂ cycloalkylene, a C₃₋₁₂ cycloalkylidene, or a C₆₋₁₆ arylene, a C₁₂₋₂₅ alkylidene of formula-C(R^{c})(R^{d})- wherein R^{c} and R^{d} are each independently hydrogen, C₁₋₂₄ alkyl, C₄₋₁₂ cycloalkyl, C₆₋₁₂ aryl, C₇₋₁₂ arylalkylene, C₇₋₁₂ heteroarylalkylene, C₇₋₁₂ alkylarylene, C₁₋₁₂ heteroalkyl, C₃₋₁₂ heterocycloalkyl, or C₇₋₁₂ heteroaryl, a group of the formula -C(=R^{e})- wherein R^{e} is a divalent C₇₋₃₁ hydrocarbon group, a C₃₋₁₈ cycloalkylidene, a fused C₇₋₁₈ cycloalkylidene, or a fused C₆₋₁₈ heterocycloalkylidene.

Examples of such high heat bisphenol groups include groups of formulas (2a) to (2g) 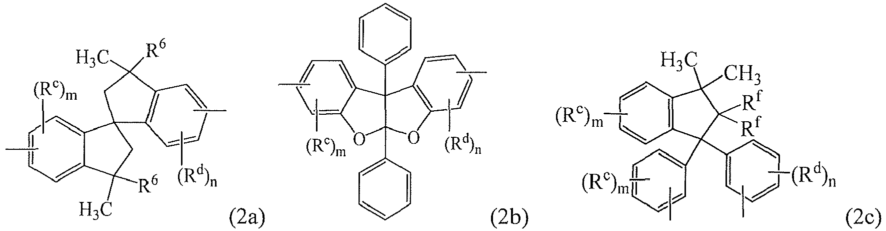 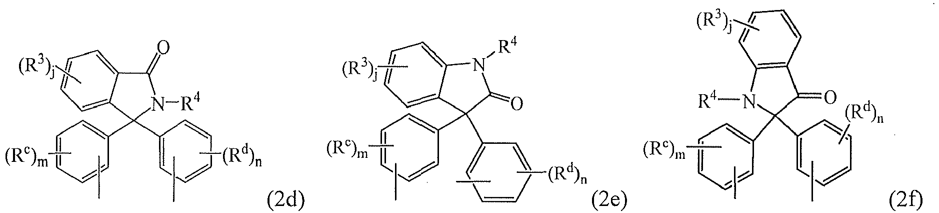 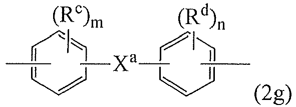 wherein R^{c} and R^{d} are each independently a C₁₋₁₂ alkyl, C₂₋₁₂ alkenyl, C₃₋₈ cycloalkyl, or C₁₋₁₂ alkoxy, each R^{f} is hydrogen or both R_{f} together are a carbonyl group, each R³ is independently C₁₋₆ alkyl, R⁴ is hydrogen, C₁₋₆ alkyl, or phenyl optionally substituted with 1-5 C₁₋₆ alkyl groups, R⁶ is independently C₁₋₃ alkyl, or phenyl, preferably methyl, X^{a} is a C₆₋₁₂ polycyclic aryl, C₃₋₁₈ mono- or polycycloalkylene, C₃₋₁₈ mono- or polycycloalkylidene, -C(R^{f})(R^{g})- wherein R^{f} is hydrogen, C₁₋₁₂ alkyl, or C₆₋₁₂ aryl and R^{g} is C₆₋₁₀ alkyl, C₆₋₈ cycloalkyl, or C₆₋₁₂ aryl, or-(Q^{a})ₓ-G-(Q^{b})_{y-}, wherein Q^{a} and Q^{b} are each independently a C₁₋₃ alkylene, G is a C₃₋₁₀ cycloalkylene, x is 0 or 1, and y is 0 or 1, and j, m, and n are each independently 0-4. A combination of high heat bisphenol groups can be used.

In an embodiment, R^{c} and R^{d} are each independently a C₁₋₃ alkyl or C₁₋₃ alkoxy, each R⁶ is methyl, each R³ is independently C₁₋₃ alkyl, R⁴ is methyl or phenyl, each R⁶ is independently C₁₋₃ alkyl or phenyl, preferably methyl, X^{a} is a C₆₋₁₂ polycyclic aryl, C₃₋₁₈ mono- or polycycloalkylene, C₃₋₁₈ mono- or polycycloalkylidene, -C(R^{f})(R^{g})- wherein R^{f} is hydrogen, C₁₋₁₂ alkyl, or C₆₋₁₂ aryl and R^{g} is C₆₋₁₀ alkyl, C₆₋₈ cycloalkyl, or C₆₋₁₂ aryl, or -(Q¹)ₓ-G-(Q²)_{y}- group, wherein Q¹ and Q² are each independently a C₁₋₃ alkylene and G is a C₃₋₁₀ cycloalkylene, x is 0 or 1, and y is 0 or 1, and j, m, and n are each independently 0 or 1.

Exemplary high heat bisphenol groups include those of formulas (2h) to (2s) 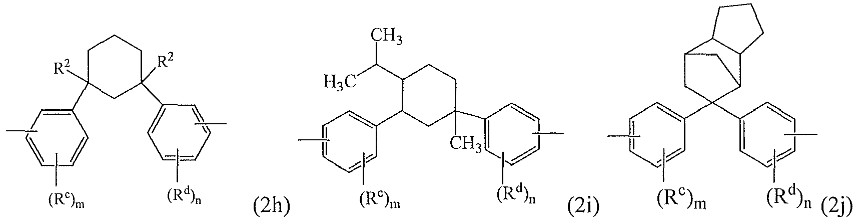 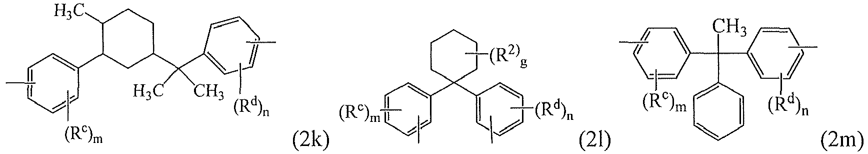 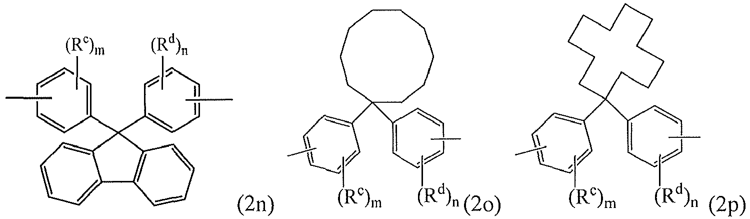 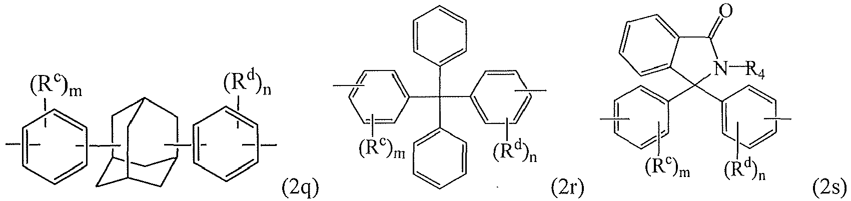 wherein R^{c} and R^{d} are the same as defined for formulas (2h) to (2s), each R² is independently hydrogen or C₁₋₄ alkyl, m and n are each independently 0-4, each R³ is independently C₁₋₄ alkyl or hydrogen, R⁴ is C₁₋₆ alkyl, or phenyl optionally substituted with 1-5 C₁₋₆ alkyl groups and g is 0-10. In a preferred aspect each bond of the divalent group is located para to the linking group that is X^{a}. In another preferred aspect, R^{c} and R^{d} are each independently a C₁₋₃ alkyl or C₁₋₃ alkoxy, each R² is methyl, x is 0 or 1, y is 1, and m and n are each independently 0 or 1.

The high heat bisphenol group may be of formula (2t) 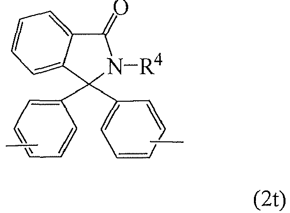 wherein R⁴ is methyl, or phenyl. Preferably, the high heat bisphenol group is derived from 2-phenyl-3,3'-bis(4-hydroxyphenyl) phthalimidine (PPPBP) or from 1,1-bis(4-hydroxyphenyl)-3,3,5-trimethylcyclohexane (BP-TMC, also known as bisphenol isophorone (BPI)). Preferably, the high heat bisphenol group is derived from1,1-bis(4-hydroxyphenyl)-3,3,5-trimethyl-cyclohexane.

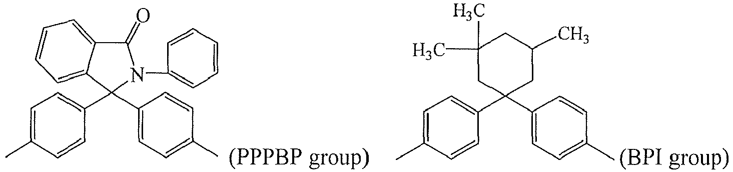

In a preferred aspect, the high heat polycarbonate can be an N-phenylphenolphthaleinylbisphenol-bisphenol A polycarbonate, a 3,3,5-trimethylcyclohexanone bisphenol-bisphenol A polycarbonate, or a combination thereof. In a more preferred aspect, the high heat polycarbonate is a 3,3,5-trimethylcyclohexanone bisphenol-bisphenol A polycarbonate.

When low heat carbonate units are present, the relative mole ratio of the low heat carbonate units (1) and high heat carbonate units (2) can vary from 99:1-1:99, depending on the desired characteristics of the polycarbonate, including Tg, hydrolytic stability, impact strength, ductility, flow, dielectric properties, and like considerations, provided that the polycarbonate meets the carbon number parameters discussed in more detail below. For example, the mole ratio of low heat carbonate units (1) : high heat carbonate units (2) can be from 90:10-10:90, from 80:20-20:80, from 70:30-30:70, or from 60:40-40:60. In a specific aspect, the polycarbonate comprises 60-80 mole percent (mol%) low heat carbonate units (1) and 20-40 mol% of high heat carbonate units (2), or 25-65 mol% low heat carbonate units (1) and 45-75 mol% of high heat carbonate units (2). In an aspect, the polycarbonate is PPPBP-BPA or BPI-BPA, preferably BPI-BPA, and the mole ratio of low heat carbonate units (1) to high heat carbonate units (2) can be from 99:1-50:50, or from 80:20-45:55. In an aspect, the polycarbonate comprises 35-55 mol% low heat carbonate units (1) and 45-65 mol% high heat carbonate units (2). In another aspect, the polycarbonate is BPA or BPI-BPA, preferably BPI-BPA, and the mole ratio of low heat carbonate units (1) to high heat carbonate units (2) can be from 20:80-60:40, or from 30:70-50:50. In an aspect, the polycarbonate comprises 35-65 mol% low heat carbonate units (1) and 55-65 mol% high heat carbonate units (2[MJA2][KV3]).

Other carbonate units can be present in the high heat polycarbonates, for example carbonate groups including polysiloxane blocks, such as polydimethylsiloxane blocks, as described below in connection with the poly(carbonate-siloxane), and, for example, in US 8114929 B2. The carbonate units comprising a polysiloxane block can be present in an amount of 1 to 25 mol%, based on based on the total moles of units in the polycarbonate. Still other carbonate units can be present in relatively small amounts, for example less than 10 mol%, less than 5 mol%, or less than 1 mol%, based on the total moles of units in the polycarbonate. In still another embodiment, no other types of repeating units are present in the high heat polycarbonates other than repeating units derived from high heat bisphenol monomers and optionally, low heat bisphenol monomers. In an embodiment, no other carbonate units are present.

Methods for the manufacture of the high heat polycarbonates are known, and include, for example, processes such as interfacial or melt polymerization. Generally, high heat polycarbonates are manufactured by interfacial processes. All types of polycarbonate end groups are contemplated as being useful, provided that such end groups do not significantly adversely affect desired properties of the film-forming compositions. In some aspects, when a polycarbonate is prepared using interfacial polymerization the end-capping group includes, for example, p-cumyl phenol, tert-butyl, and tert-octyl. When the polycarbonate is prepared using melt polymerization, the end-capping group includes, for example, phenyl. Branched polycarbonate blocks can be prepared by adding a branching agent during polymerization. Methods for the manufacture of polycarbonates, end groups, and branching agents are described, for example, in WO 2013/175448 A1, US 2014/0295363, and WO 2014/072923.

The high heat polycarbonates can have a weight average molecular weight of 10,000-200,000 grams per mole (g/mol), or 20,000-100,000 g/mol, 5,000-100,000 g/mol, or, more preferably 10,000-65,000 g/mol, 15,000-35,000 g/mol, or 18,000-35,000 g/mol, each as measured by gel permeation chromatography (GPC), using a crosslinked styrene-divinylbenzene column and calibrated to bisphenol A homopolycarbonate references. GPC samples are prepared at a concentration of 1 mg per ml and are eluted at a flow rate of 1.5 ml per minute. Combinations of polycarbonates of different flow properties can be used to achieve the overall desired flow property.

In some aspects, the high heat polycarbonate preferably has at least 50 mol% repeating units (high heat bisphenol groups) derived from high heat bisphenol monomers. Within that range, the high heat polycarbonate has at least 55 mol%, at least 60 mol%, or 65 mol% repeating units derived from high heat bisphenol monomers. In some aspects, the high heat polycarbonate comprises at least 50 mol% 3,3,5-trimethylcyclohexanone bisphenol groups, at least 60 mol%, or at least 65 mol% 3,3,5-trimethylcyclohexanone bisphenol groups, based on based on the total moles of units in the polycarbonate.

The amount of the high heat polycarbonate in the compositions can vary from 65.0-100.0 wt%, each based on the total weight of the composition. Within these limits, the amount depends on the specific high heat polycarbonate, roughening agent, slip agent, and other additives used[MJA4], as well as the desired properties of the films as described above. For example, good handling properties can be achieved using 75.0-99.9 wt%, or 85.0 to 99.9 wt%, or 90 to 99.9 wt%, 95 to 99.9 wt% of the high heat polycarbonate, each based on the total weight of the composition.

The high heat polycarbonate can have low levels of Fries rearrangement products. The high heat polycarbonate can have 10 ppm or less, or 5 ppm or less of Fries rearrangement products as determined by LC-HRMS. In some aspects, Fries rearrangement products are undetectable by LC-HRMS for the high heat polycarbonate.

The high heat polycarbonate compositions can include a polycarbonate in addition to the high heat polycarbonate. Conventional capacitor films generally include an additional polycarbonate that is not a high heat polycarbonate to adjust the flow of the film-forming composition. The additional polycarbonate can include carbonate units of formula (1). The additional polycarbonates can be homopolycarbonates or polycarbonates. In a preferred aspect, the additional polycarbonate is a homopolymer, in particular a bisphenol A homopolymer. The additional polycarbonate can have an intrinsic viscosity, as determined in chloroform at 25°C, of 0.3-1.5 dl/gm, preferably 0.45-1.0 dl/gm. The additional polycarbonate can have an Mw of 10,000-200,000 g/mol, 15,000-50,000 g/mol, 15,000-35,000 g/mol, or 19,000-21,000 g/mol, or 30,000-32,000 g/mol as determined by GPC as described above. Combinations of additional polycarbonates of different flow properties can be used to achieve the overall desired flow property. When used, the additional polycarbonate is present in low amounts so as not to decrease the glass transition temperature of the high heat polycarbonate compositions. The glass transition temperature of a composition is dependent on both the amount of PPPBP in the PPPBP-BPA copolymer and the amount of bisphenol A polycarbonate in the mixture. For example, a blend of 30 wt% bisphenol A polycarbonate and 70 wt% PPPBP-BPA having a PPPBP content of 32 mol% has a glass transition temperature of about 190°C|[MJA5]|[KV6]. If a higher glass transition temperature is desired, then the amount of bisphenol A polycarbonate should be reduced. To that end, the additional polycarbonate can be limited to an amount of up to 10 wt%, for example 0.01-10 wt%, based on the total weight of the composition. The additional polycarbonate, preferably a bisphenol A homopolymer, can be present in an amount of up to 10 wt% for example 0.01-10 wt%, based on the total weight of the composition. Within that range the additional polycarbonate may be present from 0.01-5 wt%, or 0.01-1 wt%, based on the weight of the composition. Preferably, the additional polycarbonate is excluded from the high heat polycarbonate compositions.

The high heat polycarbonate composition may include an additive composition that includes a combination of a slip agent and a roughening agent. A combination of both the organic slip agent and the roughening agent provides a film having the best combination of handling properties and dielectric properties. As used herein, a roughening agent is an agent that provides surface roughness, i.e., a physical texture, to the surfaces of the film.

Referring now to the slip agent, it has been found that not all materials known to function as slip agents are suitable for use in the extruded films. For example, ethylene bis(stearamide), a slip agent known for use in polycarbonate compositions is unsuitable, as is glycerol monostearate (data not shown). Other unsuitable slip agents include poly(alpha-olefin)s and various fluorinated polymers.

Suitable slip agents can be migratory or non-migratory. Not wishing to be bound by theory, it is believed that migratory slip agents have some degree of incompatibility with the high heat polycarbonate so that it migrates to the surface of the film. For example, during processing, slip agents can be solubilized in the melt, but as the composition cools, the slip agent can migrate to the surface, forming a lubricating layer at the surface of the film. Migratory slip agents can be used in a lesser amount than non-migratory slip agents, for example 0.01-5 wt%, based on the total weight of the composition. Non-migratory slip agents are not solubilized in the melt, can have a Tg similar to the Tg of the high heat polycarbonate, for example greater than 150°C, or greater than 170°C, or 175°C-240°C, or 180°C-240°C, or 190°C-240°C, each as determined by dynamic mechanical analysis (DMA) according to ASTM E1640-13 at a heating rate of 1°C/min and a frequency of 1 Hz, or can be a polymeric slip agent that is not miscible with the high heat polycarbonate. Non-migratory slip agents can be used in amounts including 1-15 wt%, based on the total weight of the composition. It is to be understood, however, that the terms migratory and non-migratory are used only for convenience, and certain high molecular weight compounds can be said to be intermediate between migratory and non-migratory.

Migratory slip agents can include phthalic acid esters such as dioctyl-4,5-epoxy-hexahydrophthalate; epoxidized soybean oil; silicones, including silicone oils; polyfunctional esters, for example, polyfunctional fatty acid esters such as di-,tri-, or tetra-(C₁₂₋₃₆ alkyl) esters, e.g., tristearin or pentaerythritol tetrastearate, and the like; (C₁₂₋₃₆ alkyl) esters of (C₁₂₋₃₆ carboxylates such as stearyl stearate; polypropylene glycol polymers, poly(ethylene glycol-co-propylene glycol) copolymers, or a combination comprising at least one of the foregoing glycol polymers; or, waxes such as beeswax, montan wax, paraffin wax, or the like. Such materials can be present in amounts of 0.01-5 wt%, based on the total weight of the composition. In a preferred aspect, the slip agent is a di-, tri-, tetra, or higher C₁₂₋₃₆ fatty acid ester of a polyhydric alcohol such as pentaerythritol tetrastearate, dipentaerythritol hexastearate, glycerol tristearate, or a combination thereof, present in an amount of 0.01-5 wt%, 0.01-3 wt%, or 0.01-1 wt%, each based on the total weight of the composition.

Suitable polymeric slip agents include, polymethylpentene, styrenic copolymers such as styrene-acrylonitrile copolymer (SAN) and styrene-ethylene-butylene-styrene (SEES), a poly(carbonate-siloxane), or a combination thereof. These materials can be used in amounts of 1-15 wt%, or 3-10 wt%, each based on the total weight of the composition.

A preferred non-migratory slip agent is a poly(carbonate-siloxane). In an aspect, the composition can include 1-15 wt% of a poly(carbonate-siloxane), preferably 2-10 wt%, more preferably 2-6 wt%. The poly(carbonate-siloxane) has carbonate blocks of formula (1) and siloxane blocks including repeating diorganosiloxane units of formula (3) 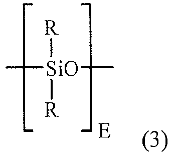 wherein each R is independently a C₁₋₁₃ monovalent organic group. For example, R can be a C₁₋₁₃ alkyl, C₁-₁₃ alkoxy, C₂₋₁₃ alkenyl, C₂-₁₃ alkenyloxy, C₃-₆ cycloalkyl, C₃-₆ cycloalkoxy, C₆-₁₄ aryl, C₆-₁₀ aryloxy, C₇-₁₃ arylalkylene, C₇-₁₃ arylalkyleneoxy, C₇-₁₃ alkylarylene, or C₇-₁₃ alkylarylenoxy. The foregoing groups can be fully or partially halogenated with fluorine, chlorine, bromine, or iodine, or a combination thereof. In an aspect, where a transparent poly(carbonate-siloxane) is desired, R is unsubstituted by halogen. Combinations of the foregoing R groups can be used in the same copolymer.

The value of E in formula (3) can vary widely depending on the type and relative amount of each component in the thermoplastic composition, the desired properties of the composition, and like considerations. E has an average value of 2-1,000, preferably 2-500, 2-200, or 2-125, 5-80, or 10-70. In an aspect, E has an average value of 10-80 or 10-40, and in still another aspect, E has an average value of 40-80, or 40-70. Where E is of a lower value, e.g., less than 40, it can be desirable to use a relatively larger amount of the poly(carbonate-siloxane). Conversely, where E is of a higher value, e.g., greater than 40, a relatively lower amount of the poly(carbonate-siloxane) can be used. A combination of a first and a second (or more) poly(carbonate-siloxane) can be used, wherein the average value of E of the first copolymer is less than the average value of E of the second copolymer.

In an aspect, the siloxane blocks are of formula (4) or (5) 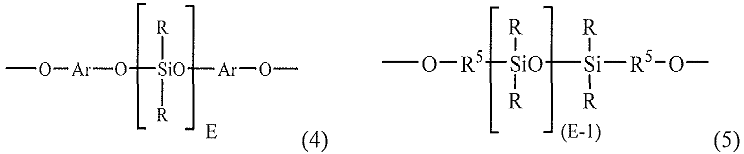 wherein E is as defined in formula (3); each R can be the same or different and is as defined in formula (3); Ar can be the same or different and is a substituted or unsubstituted C₆₋₃₀ arylene, wherein the bonds are directly connected to an aromatic moiety; and each R⁵ is independently a divalent C₁₋₃₀ organic group. The siloxane blocks are the reaction residue of the corresponding dihydroxy compound. Ar groups in formula (4) can be derived from a C₆₋₃₀ dihydroxyarylene compound, for example 1,1-bis(4-hydroxyphenyl) methane, 1,1-bis(4-hydroxyphenyl) ethane, 2,2-bis(4-hydroxyphenyl) propane, 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, 1,1-bis(4-hydroxyphenyl) cyclohexane, bis(4-hydroxyphenyl sulfide), and 1,1-bis(4-hydroxy-t-butylphenyl) propane, or a combination thereof can be used. In a specific aspect, the siloxane blocks are of formula (5a): 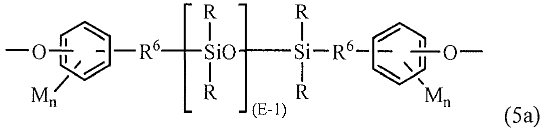 wherein R and E are as defined in formula (3); R⁶ is a divalent C₂₈ aliphatic group; and each M can be the same or different, and can be a halogen, cyano, nitro, C₁₋₈ alkylthio, C₁₋₈ alkyl, C₁₋₈ alkoxy, C₂₋₈ alkenyl, C₂₋₈ alkenyloxy, C₃₋₈ cycloalkyl, C₃₋₈ cycloalkoxy, C₆₋₁₀ aryl, C₆₋₁₀ aryloxy, C₇₋₁₂ arylalkylene, C₇₋₁₂ arylalkyleneoxy, C₇₋₁₂ alkylarylene, or C₇₋₁₂ alkylarylenoxy, wherein each n is independently 0, 1, 2, 3, or 4. In an aspect, M is bromo or chloro, an alkyl such as methyl, ethyl, or propyl, an alkoxy such as methoxy, ethoxy, or propoxy, or an aryl such as phenyl, chlorophenyl, or tolyl; R⁶ is a dimethylene, trimethylene or tetramethylene; and R is a C₁₋₈ alkyl, haloalkyl such as trifluoropropyl, cyanoalkyl, or aryl such as phenyl, chlorophenyl or tolyl. In another aspect, R is methyl, or a combination of methyl and trifluoropropyl, or a combination of methyl and phenyl. In still another aspect, R is methyl, M is methoxy, n is one, and R⁶ is a divalent C₁-C₃ aliphatic group. Specific siloxane blocks are of formulas (5b), (5c), or (5d) 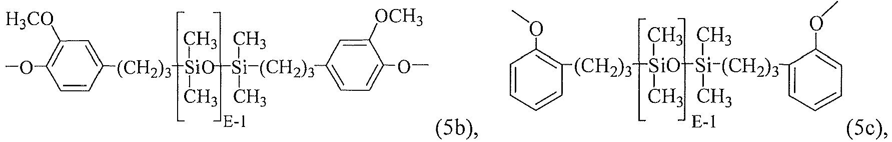 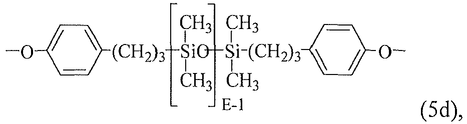 or a combination comprising thereof, wherein E has an average value of 2-200, 2-125, 5-125, 5-100, 5-50, 20-80, or 5-20.

Opaque or transparent poly(carbonate-siloxane)s can be used, where transparent copolymers can include carbonate units (1) derived from bisphenol A, and repeating siloxane units (5b), (5c), (5d), or a combination thereof (preferably of formula 5b), wherein E has an average value of 4-50, 4-15, 5-15, 6-15, or 7-10. The transparent copolymers can be manufactured using one or both of the tube reactor processes described in U.S. Patent Application No. 2004/0039145 A1 or the process described in U.S. Patent No. 6,723,864 can be used to synthesize the poly(siloxane-carbonate) copolymers. Other methods for manufacture of the (carbonate-siloxane)s are described, for example, in EP 0 524 731 A1 page 5, Preparation 2, or in US8389662.

The poly(carbonate-siloxane) can include 50-99 wt% of carbonate units and 1-50 wt% of siloxane units. Within this range, the poly(carbonate-siloxane) can include 70-98 wt%, more preferably 75-97 wt% of carbonate units and 2-30 wt%, more preferably 3-25 wt% of siloxane units. The poly(carbonate-siloxane) can have an Mw of 2,000-100,000 Da, or 5,000-50,000 Da, preferably 18,000-45,000 Da, more preferably 23,000-40,000 Da, more preferably 25,000-35,000 Da, as measured by gel permeation chromatography using a crosslinked styrene-divinyl benzene column, at a sample concentration of 1 mg/ml, and as calibrated with bisphenol A polycarbonate standards. The poly(carbonate-siloxane) can have a melt volume flow rate, measured at 300°C/1.2 kg, of 1-50 cubic centimeters per 10 minutes (cc/10 min), preferably 2-30 cc/10 min. Mixtures of poly(carbonate-siloxanes) of different flow properties can be used to achieve the overall desired flow property.

In some aspects, the polycarbonate siloxane) comprises 10-30 wt%, preferably 10-25 wt% siloxane units. The poly(carbonate siloxane) may be present in an amount effective to provide up to 3 wt% siloxane repeating units to the total composition. Within that range, the poly(carbonate siloxane) may be present in an amount effective to provide 0.05-3 wt%, 0.1-2 wt%, 0.1-1 wt%, or 02-0.8 wt% siloxane repeating units, based on the total composition.

A pliable, organic roughening agent provides an advantageous combination of good processing, handling properties, and dielectric properties. "Pliable" as used herein means that the roughening agent can deform or change shape under pressure but maintains its particulate form. Materials that form such particulates can have a Shore OO Durometer rating of 10-90, for example, or 50-80. A first roughening agent meeting these criteria can be a crosslinked silicone, preferably a silsesquioxane, more preferably a polymethyl silsesquioxane. Silsesquioxanes are cage-like structures having Si-O-Si linkages and tetrahedral Si vertices. Silsesquioxanes can be in molecular form with 6, 8, 10, and 12 Si vertices, as well as polymer form. The cages are sometimes labeled T₆ T₈, T₁₀, and T₁₂, respectively (T = tetrahedral vertex). The Ts cages have the formula [R-SiO_{1.5}]₈, or equivalently R₈Si₈O₁₂. Each Si center is bonded to three oxo groups, which in turn connect to other Si centers. The fourth group on Si is an R group. Each R group can independently be a C₁₋₈ alkyl, a C₁₋₈ alkylene, an acrylate, a methacrylate, a hydroxyl, or an epoxide.

Particulate crosslinked silicones are commercially available, for example under the trade name TOSPEARL, from Momentive Performance Chemicals. Crosslinked silicones such as TOSPEARL are spherical and have a pliable, gel-like consistency, making it amenable to processing using fine filters. For example, when the composition is passed through a melt filter (e.g., a 5 µm filter), the roughening agent does not clog the filter, avoiding the problems encountered when inorganic fine particles are used as roughening agents.

The particles of the organic roughening agent, in particular a crosslinked silicone such as a silsesquioxane can be of any shape, including regular (e.g., spherical) or irregular. The diameter of the particulate organic roughening agent can vary depending on the thickness of the films and are selected to provide the desired degree of roughening. As used herein, "diameter" refers to the diameter of a spherical particle or the diameter of a sphere having an equivalent volume of a non-spherical particle. The particulate organic roughening agent can have an average diameter of 0.1-5 µm, for example 0.2-3 µm, or 0.5-2 µm; or in another aspect, 0.1-1 µm or 0.2-0.8 µm; or in still another aspect, 1-3 µm. In an aspect, the particulate organic roughening agent can have a mean diameter of 0.1-5 µm, for example 0.2-3 µm, or 0.5-2 µm; or in another aspect, 0.1-1 µm or 0.2 to 0.8 µm; or in still another aspect, 1 to 3 µm. Preferably, the particles have a maximum diameter of 5 µm or less, for ease of manufacture. The particles can further have a narrow particle size distribution, for example a difference between the minimum and maximum diameter of 0.2-2.0 µm, or 0.3-1 µm, or 0.4-0.8 µm. Average, mean, minimum, and maximum diameters can be determined by scanning electron microscopy analysis of a sample of the particles, by Coulter counter, or by liquid phase photosedimentation with gravitational and centrifugal acceleration, measurements being obtained via optical transmission wherein the proportional relationship between absorbancy and particle concentration is used in conjunction with the Stokes Sedimentation Equation.

A second type of roughening agent is a polymer having partial miscibility with the polycarbonate and the optional additional polycarbonate and is selected to not significantly adversely affect the mechanical properties, dielectric properties, or processing of the capacitor films. Without being bound by theory, it is believed that such polymer roughening agents form immiscible islands in a continuous phase comprising the polycarbonate and optional additional polycarbonate. Without being bound by theory, it is believed that during processing, in particular extrusion, the size of the islands is decreased, becoming very fine, and migrate to the surface of the films to provide roughening to the extruded films. The second roughening agent islands are not evenly distributed on the film surface.

The second roughening agent can be a cyclic olefin copolymer (COC). COCs can be produced by chain polymerization of a cyclic olefin monomer, such as 8,9,10-trinorborn-2-ene (norbornene) or 1,2,3,4,4a,5,8,8a-octahydro-1,4:5,8-dimethanonaphthalene (tetracyclododecene) with an acyclic olefinic monomer such as ethene, or by ring-opening metathesis polymerization of various cyclic monomers followed by hydrogenation, for example. These latter materials, which use a single type of monomer are included within the scope of COCs as that term is used herein. A cyclic olefin monomer contains an endocyclic double bond (wherein both carbon atoms of the double bond are within the ring) or an exocyclic double bond (wherein one carbon bond is within the ring and one is not). Examples of cyclic olefin monomers that can be used to manufacture COCs include norbornene and derivatives thereof, such as 2-norbornene, 5-methyl-2-norbornene, 5,5-dimethyl-2-norbornene, 5-butyl- 2-norbornene, 5-ethylidene-2-norbornene, 5-methoxycarbonyl-2- norbornene, 5-cyano-2-norbornene, 5-methyl-5-methoxycarbonyl-2-norbornene, and 5-phenyl-2-norbornene; and cyclopentadiene and derivatives thereof such as dicyclopentadiene and 2,3-dihydrocyclopentadiene. Other cyclic olefin monomers are described in US 5087677. A combination comprising one or more of the cyclic olefin monomers can be used.

The acyclic olefin monomer contains a double bond wholly outside of any ring present in the monomer. Examples of acyclic olefin monomers include alkenes having 1-20 carbon atoms, preferably 1-12 carbon atoms, most preferably 1-6 carbon atoms. Alpha-olefins are preferred, for example ethylene, 1-propene, and 1-butene. Other acyclic olefin monomers included 4-methyl-1-pentene, 1-hexene, 1-octene, 1-decene, 1-dodecene, 1-tetradecene, 1-hexadecene, 1-octadecene and 1-eicocene, 1,4-hexadiene, 4-methyl-1,4-hexadiene, 5-methyl-1,4-hexadiene, 1,7-octadiene, 5-ethylidene-2-norbornene, and 5-vinyl-2-norbornene. Preferably the acyclic olefin monomer is ethylene.

In a preferred aspect, the COC is a copolymer of a cyclic olefin monomer and ethylene. In another aspect, the COC is a copolymer of norbornene and ethylene. The COCs can have at least 15 mole percent (mol%) of units derived from the cyclic olefin monomer, or 15-90 mol%, or 15-40 mol% of units derived from the unsaturated cyclic monomers, based on total moles in the polymer. The COC can have a Tg of 60-180°C, or 60-150°C, or 70-100°C, or 100-180°C. The COC can have a heat deflection temperature of 120-175°C, measured according to ISO 75, parts 1 and 2 at 0.45 MPa. Suitable COCs are sold under the trade name TOPAS from Topas Advanced Polymers.

The relative amount of each of the polycarbonate, and the COC in the films, and thus in the compositions used to form the films, can be varied to obtain the desired properties of the film. The COC can be present in an amount of 1-30 wt%, or 1-20 wt%, or 1-15 wt%, and preferably 2-10 wt%, wherein the total of all components equals 100 wt%.

In a preferred aspect, the film-forming composition includes a high heat polycarbonate, an organic slip agent, a first roughening agent, optionally a second roughening agent; optionally, a bisphenol A homopolymer; and optionally, an antioxidant. A high heat polycarbonate can be present at 65.0-99.85 wt% of the total weight of the composition. The high heat polycarbonate is preferably an N-phenylphenolphthaleinylbisphenol-bisphenol A polycarbonate, a 3,3,5-trimethylcyclohexanone bisphenol-bisphenol A polycarbonate, or a combination thereof. An organic slip agent can be present at 0.1-15.0 wt% of the total weight of the composition, and is preferably a pentaerythritol tetrastearate, dipentaerythritol hexastearate, glycerol tristearate, high density poly(ethylene), polymethylpentene, or a poly(carbonate-siloxane), or a combination thereof.

When the organic slip agent is a poly(carbonate-siloxane), the preferred amount of poly(carbonate-siloxane) in the film-forming composition is 2-10 wt%, preferably 2-6 wt% of the total weight of the composition.

When the organic slip agent is other than a poly(carbonate-siloxane), the preferred amount of organic slip agent in the film-forming composition is 0.1-5.0 wt% of the total weight of the composition. The first roughening agent can be present in an amount of 0.05-0.5 wt% and the second roughening agent can be present in an amount of 2.0-10.0 wt%, each based on the total weight of the composition.

In an aspect, the polycarbonate compositions have flow properties useful for the manufacture of extruded films. Melt volume flow rate (often abbreviated MVR) measures the rate of extrusion of a thermoplastic through an orifice at a prescribed temperature and load. The high heat polycarbonate compositions can have an MVR, measured at 330°C/2.16 kg, of 10 to 25 cubic centimeters per 10 minutes (cc/10 min), preferably 10 to 20 cc/10 min.

Good electrical properties are obtained when the film-forming compositions and extruded films contain low levels of certain metal ions. Thus, the film-forming compositions and films can contain less than 50 ppm, preferably less than 40 ppm, 30 ppm, 20 ppm, or 10 ppm by weight of each of aluminum, calcium, chromium, magnesium, iron, nickel, potassium, manganese, molybdenum, sodium, titanium, and zinc. In an aspect, the total amount of aluminum, calcium, chromium, magnesium, iron, nickel, potassium, manganese, molybdenum, sodium, titanium, and zinc in the film-forming compositions and films is less than 10 ppm. In addition to the polycarbonate and the optional additional polycarbonate, the film-forming compositions and films can include various additives ordinarily incorporated into capacitor films, with the proviso that each additive is selected so as to not significantly adversely affect the desired properties of the film-forming composition and the film, in particular dielectric breakdown strength. For this reason, ionic additives are preferably not used. Possible additives include an impact modifier, flow modifier, antioxidant, heat stabilizer, light stabilizer, plasticizer, lubricant, release agent, anti-fog agent, antimicrobial agent, radiation stabilizer, non-ionic flame retardant, anti-drip agent, or a combination thereof. In general, each additive used in an amount generally known to be effective, such as 0.005 -5 wt%. In an aspect, the total amount of the additives can be 0.01-5 wt%, based on the total weight of the film-forming composition or film.

Antioxidants include organophosphites such as tris(nonyl phenyl)phosphite, tris(2,4-di-t-butylphenyl)phosphite, bis(2,4-di-t-butylphenyl)pentaerythritol diphosphite, distearyl pentaerythritol diphosphite; alkylated monophenols or polyphenols; alkylated reaction products of polyphenols with dienes, such as tetrakis[methylene(3,5-di-tert-butyl-4-hydroxyhydrocinnamate)] methane; butylated reaction products of para-cresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-butyl-4-hydroxyphenyl)propionate, pentaerythrityl-tetrakis[3-(3,5-di-tert-butyl-4-hydroxyphenyl)propionate; amides of beta-(3,5-di-tert-butyl-4-hydroxyphenyl)-propionic acid, or combinations comprising at least one of the foregoing antioxidants. Antioxidants can be used in amounts of 0.01-0.2 wt%, or 0.01-0.1 wt%, each based on the total weight of the film-forming composition or film.

Heat stabilizer additives include organophosphites (e.g. triphenyl phosphite, tris-(2,6-dimethylphenyl)phosphite, tris-(mixed mono-and di-nonylphenyl)phosphite or the like), phosphonates (e.g., dimethylbenzene phosphonate or the like), phosphates (e.g., trimethyl phosphate, or the like), or combinations comprising at least one of the foregoing heat stabilizers. The heat stabilizer can be tris(2,4-dit-butylphenyl) phosphite, commercially available as IRGAPHOS 168. Heat stabilizers can be used in amounts of 0.01-5 wt%, based on the total weight of the film-forming composition or film.

In an aspect, an extruded film includes 65.0-99.9 wt% of a high heat polycarbonate 5.0-15.0 wt% of poly(carbonate-siloxane) slip agent; and 0.1-5.0 wt% of an organic slip agent other than the poly(carbonate-siloxane) slip agent; optionally, 0.02-0.06 wt% of a heat stabilizer; wherein each amount is based on the total weight of the composition and totals 100 wt%.

In an aspect, an extruded film includes 65.0-99.9 wt% of a high heat polycarbonate; 2.0-10.0 wt% of a cyclic olefin copolymer roughening agent; and 0.1-5.0 wt% of an organic slip agent; optionally, 0.02-0.06 wt% of a heat stabilizer; wherein each amount is based on the total weight of the composition and totals 100 wt%.

The capacitor films are manufactured by extrusion of a film-forming composition. The film-forming composition can be prepared by blending the ingredients under conditions for the formation of an intimate blend. Such conditions often include melt mixing in single or twin-screw type extruders, mixing bowl, or similar mixing devices that can apply a shear to the components. Twin-screw extruders are often preferred due to their more intensive mixing capability and self-wiping capability, over single screw extruders. It is often advantageous to apply a vacuum to the blend through at least one vent port in the extruder to remove volatile impurities in the composition. Often it is advantageous to dry the components prior to melting. The melt processing can be performed at 240-380°C to minimize or avoid polymer degradation while still allowing sufficient melting to provide an intimate polymer mixture free of any unmelted components. The polymer blend can be melt filtered using candle or screen filters to remove undesirable black specks or other heterogeneous contaminants.

The film-forming composition can be extruded using extruders conventionally used for thermoplastic compositions using a flat die. An extrusion cast film method can include melting the film-forming composition as described above in an extruder, conveying the molten film-forming composition through a flat die of small lip gap separation, optionally stretching of the film using relatively high take-up speeds, and cooling/solidifying the film-forming composition to form the final film. The extruder can be of the single- or twin-screw design, and a melt pump can be used to provide a constant, non-pulsating flow of polymer through the die. The die lip gap can be as small as 100-200 µm, and the take-up rollers can operate at speeds of up to 200 meters (m)/minute (min). The design can include the addition of a heated roll to temper/anneal the film and thus minimize the occurrence of frozen-in internal stresses. The edges of the film can be trimmed, and the film wound up on a roll using a tension-controlled winding mechanism. The accuracy of delivering a constant and uniform flow of molten polymer through the die, the rheological properties of the polymer used to make the film, the cleanliness of both polymer and equipment, and the mechanical characteristics of the take-up mechanism will all contribute to the successful preparation of extruded films of relatively small thicknesses.

The extrusion cast film method can advantageously be a one-step process that is readily scalable to larger size (including large-scale manufacturing size). Melt extrusion is advantageous over solution casting for at least these reasons. Although solution casting of certain high heat polycarbonate films has been described, the films were not reported as being manufactured on large scale. The solution casting method further requires use of solvents, which can increase the expense of the process, generate VOCs, and present waste-management concerns. It is surprising that even for polymers of high molecular weight or high Tg, the extrusion process can be designed to provide an environment for the polymer that does not lead to excessive temperatures that can cause the thermal or mechanical degradation of the material. The use of a filtration device for the melt produces a film that is virtually free of particulate contaminants that can adversely affect the quality of the film and thus the dielectric performance of the films if not properly removed from the melt. The films produced by this method are thin (10 µm in thickness, and even thinner), of uniform thickness across the web, and flat. The films can be manufactured to have no wrinkles or surface waviness.

The melted film-forming composition can be conveyed through the extruder die using a melt pump. In an aspect, the film is extruded at temperatures from 250-400°C, for example 300-400°C, or 300-380°C, or 300-370°C and the extruded film is uniaxially stretched to produce the dielectric substrate film. In an aspect, the components of the film-forming composition are combined, melted, and intimately mixed, then filtered through a melt filter (e.g., 2-15 µm or 3-5 µm) to remove particles greater than 15 µm, greater than 10 µm, preferably greater than 5 µm, or preferably greater than 3 µm; extruded through a flat die at the foregoing temperatures. The film was drawn down in the machine direction upon leaving the die, from 250 µm (die lip opening) to a final thickness of film from 3-15 µm. The film can be directly metallized as described below or wound on a take-up roll for storage or shipping. In an aspect, the film can have a length of at least 10 meters, or 100-10,000 m, and a width of at least 300 mm, or 300-3,000 mm. The rate at which the film can be extruded can vary. In commercial aspects, the rate at which the film can be extruded varies from 10 lb./hr (4.5 kg/hr)-1000 lb./hr (450 kg/hr). The rate at which the film can be pulled from the die plate of the extruder (the take-up speed) can range from 10 m/min-300 m/min.

The polymer films can be used in any amorphous film application but are particularly suitable for metallization to form capacitors or other electronic devices. The films can be metallized on at least one side thereof. A variety of metals and metal alloys can be used depending on the intended use of the film, for example copper, aluminum, silver, gold, nickel, zinc, titanium, chromium, vanadium, platinum, tantalum, niobium, brass, or a combination comprising at least one of the foregoing. The films are metallized on at least one side, that is, a side having a surface roughness Ra, Rz, or Ry each as defined and determined by optical profilometry as described in further detail below. Methods for the metallization of polymer films are known, and include, for example, vacuum metal vapor deposition, metal sputtering, plasma treatments, electron beam treatments, chemical oxidation, or reduction reactions, as well as electroless wet-chemical deposition. The films can be metallized on both sides by conventional electroless plating. In another aspect, a patterned metal layer can be formed on a surface of the film, for example by inkjet printing.

The thickness of the metallized layer is determined by the intended use of the metallized film, and can be, for example, 0.1-1000 nm, or 0.5-500 nm, or 1-10 nm. In an aspect, the thickness of the metal film can be 1-3000 Angstroms (Å), 1-2000 Å, or 1-1000 Å. If a conductive metal is used, the resistivity of the metal layer on the film can vary from 0.1-1000 Ohm (Ω) per square or 2.0-125.0 Ω per square, measured according to ASTM D257.

The films and metallized films thus produced have a variety of advantageous physical properties.

The extruded films can be very thin, having a thickness of 1-10 µm, or 1-7 µm, or 3-7 µm, or 3-5 µm.

In an aspect, the dielectric breakdown strength of the un-metallized films is greater than 700 V/µm, preferably 700-1250 V/µm, more preferably 780-1000 V/µm, even more preferably 750-900 V/µm, each at 150°C. In an aspect, the dielectric breakdown strength of the film is from 15-50 % greater at 150°C than the same film not containing a cyclic olefin copolymer.

The Tg of the unmetallized film can be 150-250°C, or 170-250°C, or 175°C-240°C, or 180°C-240°C, or 190°C-240°C, preferably 180-250°C, each as determined in accordance with ASTM E1640-13 at a heating rate of 1°C/min and a frequency of 1 Hz. The extruded films are thus suitable for high-heat applications, for example, as a rolled capacitor for a transport such an automobile.

The Bosch Test clearing count (test described below) can be 0-10 at 300 V/µm.

The un-metallized films can have a high dielectric constant, in particular greater than 2.5, preferably 2.5-3.4, measured at 1 kHz, 20°C, and 50% relative humidity.

The un-metallized films can have a dissipation factor of 0.1 or less, or 0.01 or less, measured at 1 kHz, 20°C and 50% relative humidity.

The thickness uniformity of the un-metallized films can be determined by measuring the variation in thickness of the film over a specific area. In an aspect, the un-metallized films can have variation of the thickness of the film of plus or minus (+/-) 10% or less, alternatively +/-9% or less, +/-8% or less, +/-6% or less, or +/-5% , +/-4%, +/-3%, +/-2% , +/-1% or less, based on the average thickness of the film over the measured area. In an aspect, the variation in thickness can be as low as +/-1%.

The films and the metallized films can be essentially solvent-free, that is, contain less than 1,000 ppm, less than 750 ppm, less than 500 ppm, or less than 250 ppm of a compound having a molecular weight of less than 250 Da.

The films and the metallized films can have less than 50 ppm, less than 25 ppm, or less than 10 ppm each of aluminum, calcium, chromium, magnesium, iron, nickel, potassium, manganese, molybdenum, sodium, titanium, and zinc in the polycarbonate layer.

The metallized films can be used in any metallized film application, but are particularly suitable for electrical applications, for example as capacitors or circuit materials.

High energy density, high voltage non-polar capacitors can be made using a metalized polymer film that is wound into a cylindrical shape. In a specific aspect, the polymer film is extruded, then metallized by spraying a conductive metal such as copper or aluminum onto the moving polymer film via vapor deposition in a vacuum chamber, for example to a thickness from 1 Å-1000 nm, 1-3000 Å, or 1-1000 Å. The resistivity of the metal on the extruded film can be in a range from 0.1 Ω per square-100 Ω per square as determined according to ASTM D257. Before the metallization process is performed, the extruded film can be appropriately masked to provide unmetallized margins at the edges of the width of the film, so that alternate layers of metallized film (when the capacitor is assembled) have unmetallized regions at opposite edges to prevent electrical shorting of the electrodes of the capacitor when the end metallization is ultimately applied.

The capacitors can then be fabricated by rolling two stacked metallized polymer films into a tubular shape. Electrical wires are connected to each metal layer. In a specific aspect, two separate rolls of the metallized film are placed in a capacitor winder and wound tightly together on a mandrel (which can subsequently be removed) so that the layers are arranged in the sequence polymer composition/metallized layer/polymer composition/metallized layer, to replicate a typical construction of a capacitor, i.e., a dielectric with two metallic layers on opposite sides. The two rolls of film are wound with the unmetallized margins on opposite sides.

The extent of winding of the capacitor depends on the physical size of the capacitor desired or on the capacitance desired. Tight winding of the two rolls aids in removing any entrapped air that might otherwise cause premature breakdown. Individual capacitors can be processed in a clean room environment of at least class 100, incorporating HEPA filters, to reduce the likelihood of contamination of the contact point between the dielectric film layers by foreign particles, as well as reducing moisture intake in the dielectric. Electric winding can be used to better maintain uniform tension on each capacitor. The capacitor can then be taped at the edges thereof and strapped in a tray open on both sides, to prevent unwinding of the film layers and to allow the edges or ends of the cylinder to be sprayed with a conductive element, for example with a high zinc content solder followed by a regular softer end spray solder of 90% tin, 10% zinc. The first spray scratches the metallized surface and creates a trough to achieve better contact with the metallization on the dielectric film. The combination of end sprays further aids better contact adhesion with the final termination. Subsequently, conductive, e.g., aluminum leads can then be soldered onto each end to form the final termination. One termination can be spot welded to the bottom of the can, while the other termination can be parallel welded to the lid. The capacitor can be filled with a liquid impregnate (for example, isopropyl phenyl sulfone), in vacuum filling apparatus, and closed.

Other capacitor configurations are possible. For example, the capacitor can have a flat configuration comprising at least a first and a second electrode disposed in a stacked configuration; and the extruded film disposed between and in at least partial contact with each of the first and second electrodes. Additional extruded films and electrode layers can be present in alternating layers. Thus, a multilayer article for forming an electronic device is within the scope of the present claims, comprising a polymer composition/metal layer/dielectric layer, wherein the dielectric layer can be a polymer composition film as describe herein, or other dielectric material. Additional layers (e.g., additional alternating dielectric/metal layers) can optionally be present.

This disclosure is further illustrated by the following examples, which are non-limiting.

### EXAMPLES

The materials used in the Examples are described in Table 1.

**Table 1**

| Component | Chemical Description | Source |
|---|---|---|
| BPI/BPA | 3,3,5-trimethylcyclohexanone bisphenol-bisphenol A polycarbonate∼68 mol% BPI, Mw=23,500 g/mol, with PETS mold release and triphenylphosphine stabilizer, available under the trade name APEC^{®} 2095HF | Covestro |
| PC-Si | Poly(bisphenol A carbonate-dimethylsiloxane) copolymer produced via interfacial polymerization, 20 wt% siloxane, average siloxane block length = 45 units (D45), Mw = 29,000-31,000 g/mol as per GPC using polycarbonate standards, para-cumylphenol (PCP) end-capped, polydispersity = 2-3 | SHPP |
| PMSS-1 | Particulate crosslinked polymethylsilsesquioxane, mean particle diameter = 2 µm determined via Coulter counter, bulk density = 0.35 g/cm³, specific surface area = 15-35 m²/g, available under the trade name TOSPEARL^{®} 120 | Momentive Performance Chemicals |
| PETS | Pentaerythritol tetrastearate, present in BPI/BPA | |
| AO | Tris(2,4-di-*tert*-butylphenyl)phosphite, present in BPI/BPA | |

A high heat polycarbonate composition is described in Table 2. The amounts are expressed in weight percent.

| Component | Example 1 |
|---|---|
| BPI/BPA | 196.4 |
| PC-Si | 3.0 |
| PMSS-1 | 0.6 |
| Total | 100 |

The composition was compounded on a co-rotating twin screw extruder (Length/Diameter (L/D) ratio = 36/1, vacuum port located near die face). The twin-screw extruder had enough distributive and dispersive mixing elements to produce good mixing between the polymer compositions. Compositions were compounded with zone settings that gave a melt temperature of 300-360°C, though it will be recognized that the method is not limited to these temperatures. Films were extruded using a 25 millimeter (mm) single screw extruder utilizing a melt pump to eliminate pulsating melt flow. Extruder zone temperatures were controlled between 310 °C and 365 °C. The melt was extruded through a 10 micron candle-style melt filter and then a vertical 450 mm wide t-die with a die gap clearance of 100-300 µm. The melt curtain was cast onto a polished chill roll and drawn down in the machine direction to 5 µm thickness. Gauge was controlled by matching the melt pump output and take-up speed of the downstream equipment to provide uniform constant film thickness.

Electrical properties were determined using the Bosch test (electrical clearing counts) at a 150 V/µm, 200 V/µm, 250 V/µm, 300 V/µm, 350 V/µm, 400 V/µm, and 450 V/µm. Values listed in the tables are the clearing counts at specified voltage level (150V/µm, 200 V/µm, 250 V/µm, 300 V/µm, 350 V/µm, and 400 V/µm). Clearing counts were determined as counts/m² and are reported as an average of 5 tests per voltage level. The testing apparatus and parameters are as described in WO 2020102531 (US 20220010129 A1).

This disclosure is further illustrated by the following aspects.

Aspect 1.An extruded film comprising a high heat polycarbonate composition comprising: a high heat polycarbonate comprising high heat bisphenol groups derived from a high heat bisphenol monomer where the corresponding homopolycarbonate of the monomer has a Tg of 155°C or higher, determined according to ASTM E1640-13 with a 1°C/min heating rate, and optionally, low heat bisphenol groups derived from a low heat monomer where the corresponding homopolycarbonate of the monomer has a Tg of lower than 155°C, determined according to ASTM E1640-13 with a 1°C/min heating rate, wherein the high heat polycarbonate comprises 0 to 10 ppm Fries rearrangement products, as determined by LC-HRMS.; optionally, an additive composition, wherein the extruded film comprises 0 to 40 parts per million Fries rearrangement products, as determined by LC-HRMS.

Aspect 2. The extruded film of aspect 1, wherein the melt volume rate of the high heat polycarbonate composition 10 to 25 cubic centimeters per 10 minutes, measured at 330°C and 2.16 kg.

Aspect 3. The extruded film of aspect 1, wherein the high heat polycarbonate comprises at least 50 mol% high heat bisphenol groups and the high heat polycarbonate has a glass transition temperature of 200-250°C, determined according to ASTM E1640-13 with a 1°C/min heating rate.

Aspect 4. The extruded film of any one of the preceding aspects, wherein the high heat polycarbonate comprises an interfacial high heat polycarbonate.

Aspect 5. The extruded film of any one of the preceding aspects, further comprising an additive composition comprising an impact modifier, a filler, a reinforcing agent, an antioxidant, a heat stabilizer, a light stabilizer, an ultraviolet (UV) light stabilizer, a plasticizer, a lubricant, a mold release agent, an antistatic agent, a colorant, a surface effect additive, a radiation stabilizer, a flame retardant, an anti-drip agent, a slip agent, a roughening agent, or a combination thereof, preferably, an antioxidant, a slip agent, a roughening agent, or a combination thereof.

Aspect 6. The extruded film of any one of the preceding aspects, wherein the high heat polycarbonate is derived from high heat bisphenol monomers comprising N-phenylphenolphthaleinylbisphenol, a 3,3,5-trimethylcyclohexanone bisphenol, or a combination thereof.

Aspect 7. The extruded film of any one of the preceding aspects, wherein the high heat polycarbonate is derived from 3,3,5-trimethylcyclohexanone bisphenol and the high heat polycarbonate composition comprises 0-10 wt% bisphenol A homopolycarbonate.

Aspect 8. The extruded film of any one of the preceding aspects, wherein the high heat polycarbonate is derived from 3,3,5-trimethylcyclohexanone bisphenol and the high heat polycarbonate comprises greater than 60 mol% high heat bisphenol groups.

Aspect 9. The extruded film of any one of the preceding aspects, wherein the low heat bisphenol groups derived from a low heat monomer are not present.

Aspect 10. The extruded film of any one of the preceding aspects, wherein the high heat polycarbonate comprises at least 50 mol% high heat bisphenol groups derived from 3,3,5-trimethylcyclohexanone bisphenol, an additive composition comprising a slip agent comprising a polycarbonate siloxane) present in an amount effective to provide 0.1-1 wt% siloxane repeating units, based on the total composition, or a polyfunctional ester, preferably a di-,tri-, or tetra-(C₁₂₋₃₆ alkyl) ester, more preferably pentaerythritol tetrastearate; or a combination thereof; and a roughening agent comprising a particulate crosslinked silicone, preferably a silsesquioxane.

Aspect 10a. The extruded film of aspect 10, wherein the additive composition further comprises a heat stabilizer.

Aspect 11. The extruded film of any one of the preceding aspects comprising a high heat polycarbonate composition comprising: 95-99.9 wt% of a high heat polycarbonate comprising high heat bisphenol groups derived from a high heat bisphenol monomer where the corresponding homopolycarbonate of the monomer has a Tg of 155°C or higher, determined according to ASTM E1640-13 with a 1°C/min heating rate, and optionally, low heat bisphenol groups derived from bisphenol A, wherein the high heat polycarbonate comprises up to 10 ppm Fries rearrangement products; 0.1-5 wt% of an additive composition comprising a slip agent comprising a polycarbonate siloxane) present in an amount effective to provide 0.1-1 wt% siloxane repeating units, based on the total composition, or a polyfunctional ester, preferably a di-,tri-, or tetra-(C₁₂₋₃₆ alkyl) ester, more preferably pentaerythritol tetrastearate; or a combination thereof; and a roughening agent comprising a particulate crosslinked silicone, preferably a silsesquioxane, wherein the high heat polycarbonate composition and the additive composition total 100 wt%.

Aspect 11a. The extruded film of aspect 11, wherein the additive composition further comprises a heat stabilizer.

Aspect 12. The extruded film of any one of the preceding aspects, wherein the extruded film comprises has a thickness of 1-20 µm, 1-15 µm, 1-10 µm, 1-7 µm, 3-7 µm, or 3-5 µm.

Aspect 13. The extruded film of any one of the preceding aspects, wherein the extruded film comprises a breakdown strength of greater than 700 V per µm as determined in accordance with ASTM D149 using a ball electrode.

Aspect 14. A capacitor, comprising the extruded film of any one of the preceding aspects; and an electrically conductive metal layer in contact with the film, preferably wherein the conductive layer has a resistivity of 2.0-125.0 Ω per square.

Aspect 15. An electronic device comprising the capacitor of aspect 14.

The singular forms "a," "an," and "the" include plural referents unless the context clearly dictates otherwise. "Or" means "and/or" unless clearly indicated otherwise by context. A "combination thereof' is open and includes any combination comprising at least one of the listed components or properties optionally together with a like or equivalent component or property not listed. The terms "first," "second," and the like, "primary," "secondary," and the like, as used herein do not denote any order, quantity, or importance, but rather are used to distinguish one element from another. The endpoints of all ranges directed to the same component or property are inclusive and independently combinable (e.g., ranges of "less than or equal to 25 wt%, or 5 wt% to 20 wt%," is inclusive of the endpoints and all intermediate values of the ranges of "5 wt% to 25 wt%," etc.). Disclosure of a narrower range or more specific group in addition to a broader range is not a disclaimer of the broader range or larger group. A "combination" is inclusive of blends, mixtures, alloys, reaction products, and the like.

Unless defined otherwise, technical and scientific terms used herein have the same meaning as is commonly understood by one of skill in the art to which this disclosure belongs. Compounds are described using standard nomenclature. Any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group.

As used herein, the term "hydrocarbyl" and "hydrocarbon" refers broadly to a substituent comprising carbon and hydrogen, optionally with 1-3 heteroatoms, for example, oxygen, nitrogen, halogen, silicon, sulfur, or a combination thereof; "alkyl" means a straight or branched chain, saturated monovalent hydrocarbon group; "alkylene" means a straight or branched chain, saturated, divalent hydrocarbon group; "alkylidene" means a straight or branched chain, saturated divalent hydrocarbon group, with both valences on a single common carbon atom; "alkenyl" means a straight or branched chain monovalent hydrocarbon group having at least two carbons joined by a carbon-carbon double bond; "cycloalkyl" means a non-aromatic monovalent monocyclic or multicyclic hydrocarbon group having at least three carbon atoms; "alkenyl" means a divalent hydrocarbon group having at least two carbon atoms, with at least one degree of unsaturation; "aryl" means an aromatic monovalent group containing only carbon in the aromatic ring or rings; "arylene" means an aromatic divalent group containing only carbon in the aromatic ring or rings; "alkylarylene" means an arylene group that has been substituted with an alkyl group as defined above, with 4-methylphenylene being an exemplary alkylarylene group; "arylalkylene" means an alkylene group that has been substituted with an aryl group as defined above, with benzyl being an exemplary arylalkylene group; "acyl" means an alkyl group as defined above with the indicated number of carbon atoms attached through a carbonyl carbon bridge (-C(=O)-); "alkoxy" means an alkyl group as defined above with the indicated number of carbon atoms attached through an oxygen bridge (-O-); "aryloxy" means an aryl group as defined above with the indicated number of carbon atoms, attached through an oxygen bridge (-O-); "alkylarylenoxy" means an alkylarylene group attached through an oxygen bridge (-O-); arylalkyleneoxy means arylalkylene attached through an oxygen bridge; "alkenyloxy" means an alkenyl group attached through an oxygen bridge; and "cycloalkoxy" means a non-aromatic monovalent monocyclic or multicyclic hydrocarbon group having at least three carbon atoms, attached though an oxygen bridge. "Fused" as used herein means that the indicated group is fused to a C₃₋₈ cycloaliphatic, C₆₋₁₃ aromatic, or C₂₋₁₂ heteroaromatic group.

Unless otherwise indicated, each of the foregoing groups can be unsubstituted or substituted, provided that the substitution does not significantly adversely affect synthesis, stability, or use of the compound. The term "substituted" as used herein means that at least one hydrogen on the designated atom or group is replaced with another group, provided that the designated atom's normal valence is not exceeded. When the substituent is oxo (i.e., =O), then two hydrogens on the atom are replaced. Combinations of substituents are permissible provided that the substitutions do not significantly adversely affect synthesis or use of the compound. Exemplary groups that can be present on a "substituted" position include, but are not limited to, cyano; nitro; alkanoyl such as a C₂₋₆ alkanoyl group such as acyl); carboxamido; C₁₋₆ or C₁₋₃ alkyl, cycloalkyl, alkenyl, and alkynyl (including groups having at least one unsaturated linkages and from 2-8, or 2-6 carbon atoms); C₁₋₆ or C₁₋₃ alkoxy; C₆₋₁₀ aryloxy such as phenoxy; C₁₋₆ alkylthio; C₁₋₆ or C₁₋₃ alkylsulfinyl; C₁₋₆ or C₁₋₃ alkylsulfonyl; aminodi(C₁₋₆ or C₁₋₃)alkyl; C₆₋₁₂ aryl having at least one aromatic rings (e.g., phenyl, biphenyl, naphthyl, or the like, each ring either substituted or unsubstituted aromatic); C₇₋₁₉ arylalkyl having 1-3 separate or fused rings and 6-18 ring carbon atoms; or arylalkyleneoxy having 1-3 separate or fused rings and 6-18 ring carbon atoms, with benzyloxy being an exemplary arylalkyleneoxy. The number of carbon atoms indicated for a given group includes any substituents.

All cited patents, patent applications, and other references are incorporated herein by reference in their entirety, but if a term in this application contradicts or conflicts with a term in the incorporated reference, the term from the present application takes precedence.

While particular aspects have been described, alternatives, modifications, variations, improvements, and substantial equivalents that are or may be presently unforeseen may arise to applicants or others skilled in the art. Accordingly, the appended claims as filed and as they may be amended are intended to embrace all such alternatives, modifications variations, improvements, and substantial equivalents.

## Claims

1. An extruded film comprising a high heat polycarbonate composition comprising:
a high heat polycarbonate comprising
high heat bisphenol groups derived from a high heat bisphenol monomer where the corresponding homopolycarbonate of the monomer has a Tg of 155°C or higher, determined according to ASTM E1640-13 with a 1°C/min heating rate, and
optionally, low heat bisphenol groups derived from a low heat monomer where the corresponding homopolycarbonate of the monomer has a Tg of lower than 155°C, determined according to ASTM E1640-13 with a 1°C/min heating rate,
wherein the high heat polycarbonate comprises 0 to 10 ppm Fries rearrangement products, as determined by LC-HRMS.;
optionally, an additive composition,
wherein the extruded film comprises
0 to 40 parts per million Fries rearrangement products, as determined by LC-HRMS.

2. The extruded film of claim 1, wherein the melt volume rate of the high heat polycarbonate composition 10 to 25 cubic centimeters per 10 minutes, measured at 330°C and 2.16 kg.

3. The extruded film of claim 1, wherein the high heat polycarbonate comprises at least 50 mol% high heat bisphenol groups and the high heat polycarbonate has a glass transition temperature of 200-250°C, determined according to ASTM E1640-13 with a 1°C/min heating rate.

4. The extruded film of any one of the preceding claims, wherein the high heat polycarbonate comprises an interfacial high heat polycarbonate.

5. The extruded film of any one of the preceding claims, further comprising an additive composition comprising an impact modifier, a filler, a reinforcing agent, an antioxidant, a heat stabilizer, a light stabilizer, an ultraviolet (UV) light stabilizer, a plasticizer, a lubricant, a mold release agent, an antistatic agent, a colorant, a surface effect additive, a radiation stabilizer, a flame retardant, an anti-drip agent, a slip agent, a roughening agent, or a combination thereof, preferably, an antioxidant, a slip agent, a roughening agent, or a combination thereof.

6. The extruded film of any one of the preceding claims, wherein the high heat polycarbonate is derived from high heat bisphenol monomers comprising N-phenylphenolphthaleinylbisphenol, a 3,3,5-trimethylcyclohexanone bisphenol, or a combination thereof.

7. The extruded film of any one of the preceding claims, wherein the high heat polycarbonate is derived from 3,3,5-trimethylcyclohexanone bisphenol and the high heat polycarbonate composition comprises 0-10 wt% bisphenol A homopolycarbonate.

8. The extruded film of any one of the preceding claims, wherein the high heat polycarbonate is derived from 3,3,5-trimethylcyclohexanone bisphenol and comprises greater than 60 mol% high heat bisphenol groups.

9. The extruded film of any one of the preceding claims, wherein the low heat bisphenol groups derived from a low heat monomer are not present.

10. The extruded film of any one of the preceding claims, wherein the high heat polycarbonate comprises
at least 50 mol% high heat bisphenol groups derived from 3,3,5-trimethylcyclohexanone bisphenol, an additive composition comprising
a slip agent comprising
a polycarbonate siloxane) present in an amount effective to provide 0.1-1 wt% siloxane repeating units, based on the total composition, or
a polyfunctional ester, preferably a di-,tri-, or tetra-(C₁₂₋₃₆ alkyl) ester, more preferably pentaerythritol tetrastearate;
or a combination thereof;
a roughening agent comprising a particulate crosslinked silicone, preferably a silsesquioxane.

11. The extruded film of any one of the preceding claims comprising a high heat polycarbonate composition comprising:
95-99.9 wt% of a high heat polycarbonate comprising
high heat bisphenol groups derived from a high heat bisphenol monomer where the corresponding homopolycarbonate of the monomer has a Tg of 155°C or higher, determined according to ASTM E1640-13 with a 1°C/min heating rate, and
optionally, low heat bisphenol groups derived from bisphenol A,
wherein the high heat polycarbonate comprises up to 10 ppm Fries rearrangement products;
0.1-5 wt% of an additive composition comprising
a slip agent comprising
a polycarbonate siloxane) present in an amount effective to provide 0.1-1 wt% siloxane repeating units, based on the total composition, or
a polyfunctional ester, preferably a di-,tri-, or tetra-(C₁₂₋₃₆ alkyl) ester, more preferably pentaerythritol tetrastearate;
or a combination thereof;
a roughening agent comprising a particulate crosslinked silicone, preferably a silsesquioxane,
wherein the high heat polycarbonate and the additive composition total 100 wt%.

12. The extruded film of any one of the preceding claims, wherein the extruded film has a thickness of 1-20 µm, 1-15 µm, 1-10 µm, 1-7 µm, 3-7 µm, or 3-5 µm.

13. The extruded film of any one of the preceding claims, wherein the film comprises a breakdown strength of greater than 700 V per µm as determined in accordance with ASTM D149 using a ball electrode.

14. A capacitor, comprising
the extruded film of any one of claims 1-13; and
an electrically conductive metal layer in contact with the film, preferably wherein the conductive layer has a resistivity of 2.0-125.0 Ω per square.

15. An electronic device comprising the capacitor of claim 14.
